# EUROPÄISCHE PATENTSCHRIFT

(11) **EP 1 637 793 B1**
(45) Veröffentlichungstag und Bekanntmachung des Hinweises auf die Patenterteilung: **12.08.2009**
(21) Anmeldenummer: 05020335.5
(22) Anmeldetag: 17.09.2005
(51) Int. Cl.: F16L 55/04, F16D 25/12

(54) **Hydraulischer Aktuator mit Schwingungsdämpfer**
Hydraulic actuator with vibration absorber
Actionneur hydraulique avec amortisseur de vibrations

(30) Priorität: 21.09.2004 GB 0420890
(43) Veröffentlichungstag der Anmeldung: 22.03.2006
(73) Patentinhaber: LuK Lamellen und Kupplungsbau Beteiligungs KG, 77815 Bühl (DE)
(72) Erfinder: Le Clos Gobert, Filipe Franco, 45800 St Jean de Braye (FR)

(56) Entgegenhaltungen:
- DE-A1- 3 807 954
- JP-A- 62 200 034
- US-A- 5 320 203
- US-B1- 6 669 309
- US-B1- 6 789 388

## Beschreibung

Die Erfindung betrifft hydraulische Aktuatoren und insbesondere, aber nicht ausschließlich, hydraulische Aktuatoren, die als Geber- oder Nehmerzylinder in einem Hydrauliksystem zum Betätigen einer Fahrzeugkupplung verwendet werden.

Eines der Probleme bei solchen Systemen besteht darin, Schwingungen, die durch die zugehörige Kupplung und den Fahrzeugantrieb in der unter Druck stehenden Flüssigkeit des Systems erzeugt werden, zu dämpfen, um die Übertragung von unangenehmen Geräuschen oder mechanischen Schwingungen über das Kupplungspedal auf den Fahrzeugführer zu verhindern.

Zur Dämpfung solcher Schwingungen in der Systemflüssigkeit sind viele Lösungen vorgeschlagen worden, die solche Schwingungen zwar zufriedenstellend dämpfen können, aber oft sehr voluminös sind und zusätzliche Leitungen für den Anschluss an das System benötigen. Beispielsweise sind aus der US 5,320,203 verschiedene Ausführungsformen von Filtern bekannt, die in eine hydraulische Leitung zwischen Geber- und Nehmerzylinder eingebaut werden.

Die Aufgabe der vorliegenden Erfindung besteht darin, eine verbesserte Anordnung zum Einbeziehen solcher Schwingungsdämpfer in ein Hydrauliksystem bereitzustellen, das sich insbesondere für die Verwendung in einem Kupplungsbetätigungssystem eignet.

Daher wird gemäß der vorliegenden Erfindung ein Geberzylinder bereitgestellt, der einen Zylinderkörper aufweist, in welchem ein Arbeitskolben in einer Bohrung gleiten kann, und vor dem Kolben eine Druckkammer definiert, in welcher eine Arbeitsflüssigkeit mit Druck beaufschlagt wird, wobei im Geberzylinderkörper ein zweistufiger Schwingungsdämpfer untergebracht ist, der aus einer Kammer mit veränderlichem Volumen besteht, die zur Dämpfung der Schwingungen in der Arbeitsflüssigkeit über ein Drosselmittel mit der Druckkammer verbunden ist.

Bei einer solchen Anordnung wird durch die Bewegung der Arbeitsflüssigkeit durch das Drosselelement eine erste Dämpfungsstufe und durch die Ausdehnung der Kammer mit veränderlichem Volumen eine zweite Dämpfungsstufe erreicht.

Bei einer bevorzugten Anordnung befindet sich die Kammer mit veränderlichem Volumen innerhalb der Bohrung.

Die Kammer mit veränderlichem Volumen kann zum Beispiel durch eine flexible Membran gebildet werden, welche in einem zwischen zwei Teilen eines in der Bohrung befindlichen Schwingungsdämpfungskörpers gebildeten Hohlraum angeordnet wird, wobei sich zwischen der Außenfläche der Membran und dem Hohlraum, in den die Membran ausweichen kann, zur Dämpfung der Schwingungen in der Arbeitsflüssigkeit ein oder mehrere Luftpolster befinden.

Der Dämpfungshohlraum, welcher die Membran aufnimmt, kann in geeigneter Weise zwischen einem Hauptschwingungsdämpfungskörper und einer diesen umgebenden Verschlusskappe bereitgestellt werden, welche die Membran umschließt und am Hauptschwingungsdämpfungskörper befestigt ist.

Die Membran kann fest zwischen dem Hauptschwingungsdämpfungskörper und der Verschlusskappe eingebaut sein, wobei die Membran einen ringförmigen Flansch aufweist, der ein offenes Ende der Membran umgibt, und zwischen einander gegenüber liegenden ringförmigen Rändern der Verschlusskappe und des Hauptschwingungsdämpfungskörpers eingeschlossen ist.

Ein Teil des Hauptschwingungsdämpfungskörpers kann durch das offene Ende der Membran ragen und eine Vielzahl von Löchern/Nuten zum Entlüften des Geberzylinders enthalten, damit zwischen dem herausragenden Teils des Dämpfungskörpers und der Innenseite der umgebenden Membran keine Luft eingeschlossen ist.

Die Außenseite der Schwingungsdämpfungsverschlusskappe kann ebenfalls mit Schlitzen versehen sein, damit zwischen der Verschlusskappe und der Bohrung, in welcher die Verschlusskappe eingeschlossen ist, keine Luft eingeschlossen werden kann.

Im Folgenden wird eine Ausführungsart der vorliegenden Erfindung lediglich anhand eines Beispiels unter Bezug auf die beiliegenden Zeichnungen beschrieben, wobei:
Fig. 1 eine seitliche Teilquerschnittsansicht eines Geberzylinders gemäß der vorliegenden Erfindung zeigt;
Fig. 2 zeigt vergrößert den durch einen Kreis markierten Endteil von Fig. 1 ;
Fig. 3 zeigt vergrößert die inneren Einzelheiten der in den Figuren 1 und 2 dargestellten Dämpfungsvorrichtung;

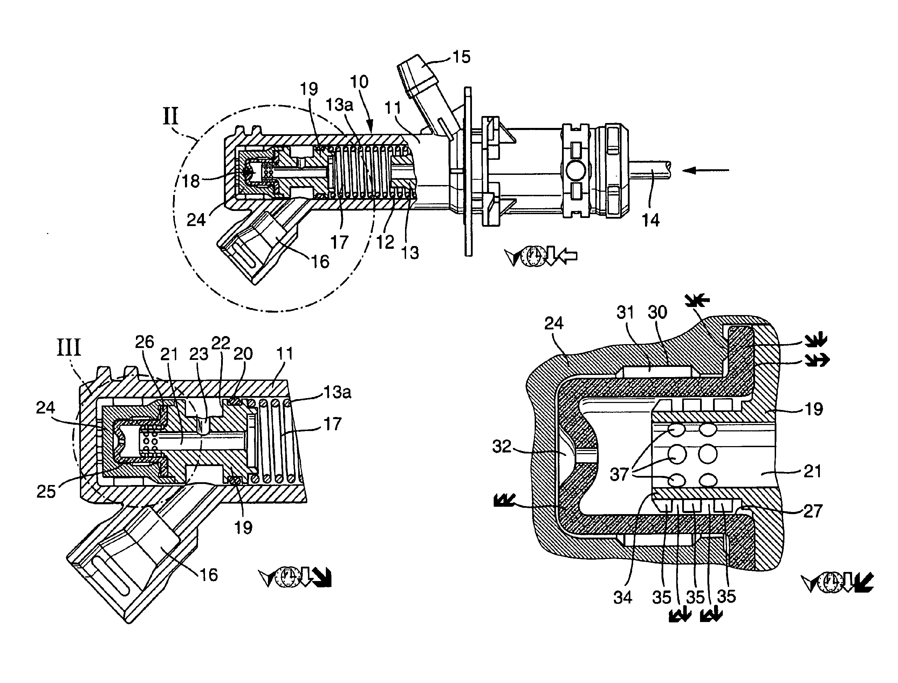

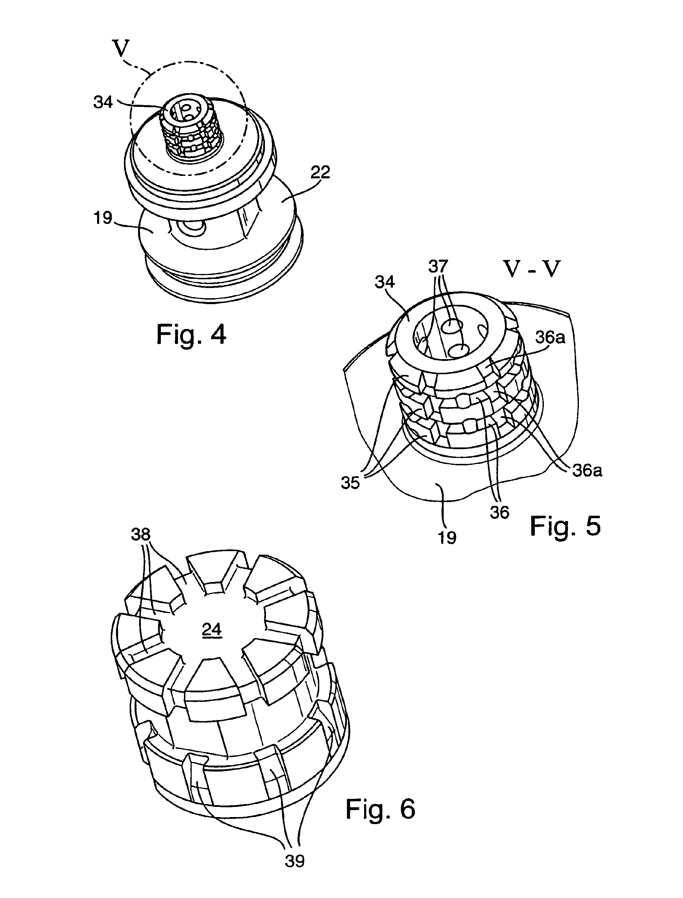

Fig. 4 und 5 zeigen perspektivische Ansichten eines Endteils eines Hauptkörperteils des Schwingungsdämpfers und
Fig. 6 zeigt eine perspektivische Ansicht der äußeren Einzelheiten einer an den Hauptkörperteil des Schwingungsdämpfers angepassten Verschlusskappe , welche eine Membran des Schwingungsdämpfers einschließt.

Die Zeichnungen zeigen, dass ein Geberzylinder 10 einen Grundkörper 11 mit einer Bohrung 12 aufweist, in welcher ein Kolben 13 unter Einwirkung einer Kolbenstange 14 hin- und hergleiten kann, die mit einem entsprechenden (nicht dargestellten) Kupplungspedal verbunden ist. Der Grundkörper 11 weist eine Einlassöffnung 15, die mit einem (nicht dargestellten) Flüssigkeitsbehälter verbunden ist, und eine Auslassöffnung 16 auf, die über eine (nicht dargestellte) Leitung mit einem Kupplungsnehmerzylinder verbunden ist.

In Fig. 1 befindet sich vom Kolben 13 aus gesehen auf der linken Seite eine Druckkammer 17, aus der durch eine Arbeitsbewegung des Kolbens 13 eine unter Druck stehende Flüssigkeit nach der in Fig. 1 gezeigten linken Seite verdrängt wird.

Gemäß der vorliegenden Erfindung ist am linken Ende in der Bohrung 12 ein zweistufiger Flüssigkeitsschwingungsdämpfer 18 untergebracht. Der Schwingungsdämpfer 18 umfasst einen im Allgemeinen zylindrischen Hauptschwingungsdämpfungskörper 19, der zur Bohrung 12 hin durch einen O-Ring (oder eine andere geeignete Dichtung) abgedichtet ist, und eine Durchgangsbohrung 21, weiterhin einen ringförmigen schlanken Teil 22 und eine Radialbohrung 23, welche den schlanken Teil 22 mit der Durchgangsbohrung 21 verbindet. Der schlanke Teil 22 ist so auf die Auslassöffnung 16 ausgerichtet, dass die Flüssigkeit aus der Druckkammer 17 über die Durchgangsbohrung 21, die radiale Bohrung 23 und den schlanken Teil 22 zur Auslassöffnung 16 verdrängt wird.

Am Ende des Hauptschwingungsdämpfungskörpers 19 ist eine Verschlusskappe 24 angebracht, welche eine hutförmige flexible Membran 25 umschließt. Die Membran 25 weist einen ringförmigen Flanschteil 26 auf, der eine Öffnung 27 in der Membran 25 umgibt und fest zwischen den einander gegenüber liegenden ringförmigen Rändern 28 und 29 des Hauptschwingungsdämpfungskörpers 19 bzw. der Verschlusskappe 24 eingeschlossen ist. Die Verschlusskappe 24 ist mit einer Innennut 30 versehen, welche um die Membran 25 herum ein Luftpolster bildet. Zwischen der Verschlusskappe 24 und dem Basisteil 33 der Membran 25 befindet sich ein weiteres Luftpolster 32.

Ein Endteil 34 des Hauptschwingungsdämpferkörpers 19 des Schwingungsdämpfers 18 ragt durch die Öffnung 27 der Membran und weist Außenrippen 35 auf, die Nuten 36 definieren, durch welche radiale Bohrungen 37 zur Durchgangsbohrung 21 führen. Die Nuten 36 werden durch axiale Schlitze 36a miteinander verbunden. Durch diese Rippen, Nuten, Schlitze und Löcher wird verhindert, dass zwischen dem Endteil 34 des Hauptschwingungsdämpfungskörpers und der Innenfläche der umgebenden Membran 25 Luft eingeschlossen wird. Das ist besonders dann von Bedeutung, wenn das Hydrauliksystem das erste Mal entlüftet wird, um die eingeschlossene Luft zu entfernen.

Die Außenfläche der Verschlusskappe 24 ist ebenfalls mit einer Reihe von Schlitzen 38 und Nuten 39 versehen, welche verhindern, dass zwischen der Verschlusskappe 24 und der umgebenden Bohrung 12 Luft eingeschlossen wird. Auf diese Weise ist die gesamte Außenfläche der Verschlusskappe 24 von unter Druck stehender Flüssigkeit umgeben, sodass die auf die Verschlusskappe 24 einwirkende Gesamtspannung verringert wird. Die Verschlusskappe 24 und der Hauptschwingungsdämpfungskörper 19 werden durch eine zwischen dem Kolben 13 und dem Hauptschwingungsdämpfungskörper 19 wirkende Kolbenrückholfeder 13a gegen das Ende der Bohrung 12 gedrückt.

Der oben beschriebene Schwingungsdämpfer 18 arbeitet wie folgt. Der Geberzylinder 10 wird durch Niederdrücken des Kupplungspedals betätigt, welches die Kolbenstange 14 in der oben beschriebenen Weise nach links verschiebt. Hierdurch wird wiederum der Kolben 13 nach links verschoben, wobei die unter Druck stehende Flüssigkeit über die Durchgangsbohrung 21, die radiale Bohrung 23 und den schlanken Teil 22 zur Auslassöffnung 16 hin verdrängt wird. Die Schwingungen, die auf die Arbeitsflüssigkeit des Systems übertragen werden, zum Beispiel von dem mit der Auslassöffnung 16 verbundenen zugehörigen Nehmerzylinder, gelangen zum schlanken Teil 22 des Hauptschwingungsdämpfungskörper 19. Vom schlanken Teil 22 aus werden diese Schwingungen durch die radiale Bohrung 23, welche einen kleineren Durchmesser als die Durchgangsbohrung 21 aufweist und daher schwingungsdämpfend wirkt, und weiter über die Durchgangsbohrung 21 zur Öffnung 27 in der Membran 25 geleitet, sodass die Membran in die Luftpolster 31 und 32 ausweicht und somit diese Schwingungen weiter dämpft. Somit erfolgt eine zweistufige Schwingungsdämpfung, wobei die erste Stufe durch das Durchtreten der schwingenden Flüssigkeit durch die Bohrung 23 mit dem kleineren Durchmesser und die zweite Stufe durch das Drücken der Membran 25 in die Luftpolster 31 und 32 erreicht wird. Es ist klar, dass der Hauptschwingungsdämpfungskörper 19 äußerst kompakt ist und in das vorhandene Ende der Bohrung 12 eingepasst werden kann.

Dies ist von besonderem Vorteil, wenn der Geberzylinder 10 in einem Fahrzeug mit beengtem Fahrgastraum verwendet werden soll.

## Patentansprüche

1. Geberzylinder (10), der einen Grundkörper (11) mit einem Kolben (13) aufweist, welcher in einer Bohrung (12) gleiten kann und vor dem Kolben (13) eine Druckkammer (17) definiert, in welcher eine Arbeitsflüssigkeit mit Druck beaufschlagt wird, **dadurch gekennzeichnet, dass** im Grundkörper (11) ein zweistufiger hydraulischer Schwingungsdämpfer (18) untergebracht ist, der aus einer Kammer mit veränderlichem Volumen besteht, die zur Dämpfung der Schwingungen in der Arbeitsflüssigkeit über ein Drosselmittel mit der Druckkammer (17) verbunden ist.

2. Geberzylinder nach Anspruch 1, **dadurch gekennzeichnet, dass** sich die Kammer mit veränderlichem Volumen in der Bohrung (12) des Grundkörpers (11) befindet.

3. Geberzylinder nach Anspruch 1 oder 2, **dadurch gekennzeichnet, dass** die Kammer mit veränderlichem Volumen durch eine flexible Membran (25), die in einen zwischen zwei Teilen eines in der Bohrung (12) befindlichen Schwingungsdämpfungskörpers (19) gebildeten Hohlraum eingeschlossen ist, und wobei ein oder mehrere Luftpolster zwischen der Außenfläche der Membran (25) und dem Hohlraum bereitgestellt wird, in welche die Membran (25) ausweichen und die Schwingungen in der Arbeitsflüssigkeit dämpfen kann.

4. Geberzylinder nach Anspruch 3, **dadurch gekennzeichnet, dass** der Dämpfungshohlraum, welcher die Membran (25) aufnimmt, zwischen einem Hauptschwingungsdämpfungskörper (19) und einer umgebenden Verschlusskappe (24) bereitgestellt wird, welche die Membran (25) umschließt und am Hauptschwingungsdämpfungskörper (19) befestigt ist.

5. Geberzylinder nach Anspruch 4, **dadurch gekennzeichnet, dass** die Membran fest zwischen den Hauptschwingungsdämpfungskörper (19) und der Verschlusskappe (24) eingeschlossen ist, wobei die Membran (25) einen ringförmigen Flansch (26) aufweist, der ein offenes Ende der Membran (25) umgibt und zwischen einander gegenüber liegenden ringförmigen Rädern der Verschlusskappe (24) und des Hauptschwingungsdämpfungskörpers (19) eingeschlossen ist.

6. Geberzylinder nach Anspruch 4 oder 5, **dadurch gekennzeichnet, dass** ein Teil des Hauptschwingungsdämpfungskörpers (19) durch das offene Ende der Membran (25) ragt und eine Vielzahl von Löchern/Nuten (35,36,37) zum Entlüften des Geberzylinders (10) enthalten kann, damit zwischen dem herausragenden Teil des Hauptschwingungsdämpfungskörpers (19) und der Innenseite der umgebenden Membran (25) keine Luft eingeschlossen ist.

7. Geberzylinder nach einem der Ansprüche 4 bis 6, **dadurch gekennzeichnet, dass** die Außenseite der Verschlusskappe (24) mit Schlitzen (38) versehen ist, damit zwischen der Verschlusskappe (24) und der Bohrung (12), in welcher sich die Verschlusskappe (24) befindet, keine Luft eingeschlossen wird.

## Claims

1. Master cylinder (10), which has a basic body (11) with a piston (13) which can slide in a bore (12) and upstream of the piston (13) defines a pressure chamber (17) in which a working fluid is acted upon with pressure, **characterized in that** the basic body (11) accommodates a two-stage hydraulic vibration damper (18) consisting of a chamber of variable volume which is connected to the pressure chamber (17) via a throttle means for the damping of vibrations in the working fluid.

2. Master cylinder according to Claim 1,
**characterized in that** the chamber of variable volume is located in the bore (12) of the basic body (11).

3. Master cylinder according to Claim 1 or 2,
**characterized in that** the chamber of variable volume is formed by a flexible diaphragm (25) which is enclosed in a cavity formed between two parts of a vibration damping body (19) located in the bore (12), one or more air cushions being provided between the outer face of the diaphragm (25) and the cavity, into which the diaphragm (25) can shift and damp the vibrations in the working fluid.

4. Master cylinder according to Claim 3,
**characterized in that** the damping cavity which receives the diaphragm (25) is provided between a main vibration damping body (19) and a surrounding closing cap (24) which surrounds the diaphragm (25) and is fastened to the main vibration damping body (19).

5. Master cylinder according to Claim 4,
**characterized in that** the diaphragm is enclosed fixedly between the main vibration damping body (19) and the closing cap (24), the diaphragm (25) having an annular flange (26) which surrounds an open end of the diaphragm (25) and is enclosed between mutually opposite annular margins of the closing cap (24) and of the main vibration damping body (19).

6. Master cylinder according to Claim 4 or 5,
**characterized in that** part of the main vibration damping body (19) projects through the open end of the diaphragm (25) and can contain a multiplicity of holes/grooves (35, 36, 37) for venting the master cylinder (10), so that no air is enclosed between the projecting part of the main vibration damping body (19) and the inside of the surrounding diaphragm (25).

7. Master cylinder according to one of Claims 4 to 6, **characterized in that** the outside of the closing cap (24) is provided with slots (38), so that no air is enclosed between the closing cap (24) and the bore (12) in which the closing cap (24) is located.

## Revendications

1. Cylindre émetteur (10), qui comprend un corps de base (11) avec un piston (13), qui peut coulisser dans un alésage (12) et qui définit devant le piston (13) une chambre sous pression (17), dans laquelle un liquide de travail est soumis à la pression, **caractérisé en ce qu'**un amortisseur hydraulique de vibrations à deux étages (18) est installé dans le corps de base (11), lequel se compose d'une chambre à volume variable, qui est raccordée à la chambre sous pression (17) par un moyen d'étranglement pour l'amortissement des vibrations dans le liquide de travail.

2. Cylindre émetteur selon la revendication 1,
**caractérisé en ce que** la chambre à volume variable se trouve dans l'alésage (12) du corps de base (11).

3. Cylindre émetteur selon la revendication 1 ou 2, **caractérisé en ce que** la chambre à volume variable est formée par une membrane flexible (25), qui est enfermée dans une cavité formée entre deux parties d'un corps d'amortissement de vibrations (19) se trouvant dans l'alésage (12), et dans lequel il est prévu, entre la face extérieure de la membrane (25) et la cavité, un ou plusieurs coussins d'air dans lesquels la membrane (25) peut se déformer et amortir les vibrations dans le liquide de travail.

4. Cylindre émetteur selon la revendication 3,
**caractérisé en ce que** la cavité d'amortissement, qui contient la membrane (25), est formée entre un corps principal d'amortissement de vibrations (19) et un capuchon de fermeture enveloppant (24), qui entoure la membrane (25) et qui est fixé au corps principal d'amortissement de vibrations (19).

5. Cylindre émetteur selon la revendication 4,
**caractérisé en ce que** la membrane est fermement enfermée entre le corps principal d'amortissement de vibrations (19) et le capuchon de fermeture enveloppant (24), dans lequel la membrane (25) présente une bride annulaire (26), qui entoure une extrémité ouverte de la membrane (25) et qui est enfermée entre des bords annulaires opposés l'un à l'autre du capuchon de fermeture (24) et du corps principal d'amortissement de vibrations (19).

6. Cylindre émetteur selon la revendication 4 ou 5, **caractérisé en ce qu'**une partie du corps principal d'amortissement de vibrations (19) pénètre à travers l'extrémité ouverte de la membrane (25) et peut comporter une pluralité de trous/rainures (35, 36, 37) pour la purge du cylindre émetteur (10), afin qu'il n'y ait pas d'air enfermé entre la partie pénétrante du corps principal d'amortissement de vibrations (19) et le côté intérieur de la membrane enveloppante (25).

7. Cylindre émetteur selon l'une quelconque des revendications 4 à 6, **caractérisé en ce que** le côté extérieur du capuchon de fermeture (24) est pourvu de fentes (38), afin qu'il n'y ait pas d'air enfermé entre le capuchon de fermeture (24) et l'alésage (12), dans lequel le capuchon de fermeture (24) se trouve.
